# EUROPEAN PATENT SPECIFICATION

(11) **EP 1 305 787 B1**
(45) Date of publication and mention of the grant of the patent: **13.09.2006**
(21) Application number: 00988157.4
(22) Date of filing: 19.12.2000
(51) Int. Cl.: G09F 15/02

(54) **GRAPHIC IMAGE FILM REGISTRATION SYSTEMS AND METHODS**
FILM MIT PASSMARKEN ZUM AUFBAU GROSSER BILDER
SYSTEMES ET PROCEDES D'ALIGNEMENT D'UN FILM-IMAGE GRAPHIQUE

(30) Priority: 27.07.2000 US 626621
(43) Date of publication of application: 02.05.2003
(73) Proprietor: 3M Innovative Properties Company, St. Paul, MN 55133-3427 (US)
(72) Inventor: ANDERSON, Conrad, V., Saint Paul, MN 55133-3427 (US); BEHNKE, Brett, A., Saint Paul, MN 55133-3427 (US); DAVID, John, R., Saint Paul, MN 55133-3427 (US); STEELMAN, Ronald, S., Saint Paul, MN 55133-3427 (US)
(74) Representative: Vossius & Partner
(86) International application number: PCT/US2000/034475
(87) International publication number: WO 2002/011107

(56) References cited:
- WO-A-97/21206
- US-A- 4 964 070
- US-A- 5 217 550
- US-A- 5 389 476

## Description

### Field of the Invention

The present invention relates to the field of graphic image films. More particularly, the present invention provides methods of registering composite graphic images on films as the films are applied to a substrate and kits including films used to form a composite image.

### Background of the Invention

Composite images formed using multiple films with complementary portions of the composite images formed thereon are often used for advertising on, e.g., trucks, signs, and other large surfaces. The images must often be provided as composites using multiple films due to size limitations in the manufacturing and application of the films on which the images are provided, i.e., one film that is large enough to contain the entire image may be impossible to produce and/or apply.

Although film-based graphic images can typically be made in unlimited lengths (particularly when using digital imaging methods), variations during the imaging processes may also introduce errors into the manufactured length of the images on the films. For example, differences in brake tension during manufacturing can easily cause a difference in manufactured film length of 0.1 %. These errors can be accommodated with known manual application techniques using relatively short panels because skilled applicators can adjust the film dimensions during installation. If, however, the films are to be applied to a large surfaces such as a semitrailer that is, e.g., 53 feet (16 meters) long, the errors in the images on two different films may be about 0.5 inches (1.25 centimeters), which is typically unacceptable.

In addition to the dimensional tolerance errors that can be introduced into long films during imaging, very long films are also difficult to handle and apply by conventional techniques. As a result, the complete composite images are typically formed using a number of panels of film that are, e.g., 36 to 48 inches (about 1 to 1.25 meters) wide and 8 to 9 feet (about 2.5 to 3 meters) long. Each panel includes a portion of the composite image and, thus, the panels must be properly aligned with each other to present a high quality composite image to a viewer.

The composite image is formed on the substrate by manually adhering the films to the substrate using, in most cases, a pressure sensitive adhesive. An applicator usually starts at the top of each film and works toward the bottom while removing a liner used to protect the adhesive. The films are laminated to the substrate using manual pressure applied with a squeegee-like device approximately 10 centimeters long. A skilled applicator will stretch or pull each film slightly as it is being applied to maintain registration between the different panels used to form the composite image. Such manual registration helps compensate for any dimensional errors introduced during the imaging processes. Limiting the length of the panels also reduces visible error. The process of aligning and adhering each film is typically, however, labor intensive and requires a high degree of skill on the part of the applicator. Furthermore, the longevity of the resulting composite image can depend on the skill of the applicator in properly adhering the films to the substrate.

The idea of using registration works to align a pattern-transfer plate with a pattern-receiving plate is disclosed in US-A-5 217 550.

### Summary of the Invention

The present invention provides methods of forming composite images on a substrate using a plurality of films that are applied and registered with each other under tension. The films include registration marks distributed along their lengths and those registration marks can be used to vary the tension under which the films are dispensed during application to a substrate.

By detecting the registration marks on a film already applied to a substrate and detecting corresponding registration marks on a film being dispensed and applied to the substrate, registration between the different portions of the composite images on the different films can be maintained over the length of the films to precisely align all sections of the composite image formed by the films. That registration is controlled by varying tension of the film being applied.

It may be advantageous to apply all of the films, including the first film, under at least some continuous level of tension to provide the opportunity to control registration of the later-applied films by varying the tension under which the later-applied films are dispensed. For example, a first film may be dispensed and applied at a predetermined tension or stretch. The tension or stretch on successively applied films can then be varied above and/or below the predetermined setpoint of the first film to control registration.

Other advantages of various aspects of the present invention include the ability to form composite images using films that extend continuously and unbroken along the length of the composite image. As a result, the films forming the composite image may overlap in only one direction with no films required to abut each other along the length of the composite image. In some aspects, the films and the composite image they form may have a length of at least about 5 meters or more, at least about 10 meters or more, and, in some instances, at least about 15 meters or more. It may also be advantageous to dispense the films from rolls.

The registration marks on films already applied to the substrate may be covered by later-applied films. With respect to the last film applied to complete the image, the registration marks may be removed before or after application of the last film to the substrate. Other alternatives include the use of registration marks that are invisible to the unaided human eye, or the use of registration marks that are washable after the films are applied to the substrate. Another alternative is the use of registration marks on the liners used to deliver a film including a pressure sensitive adhesive on one surface.

In one aspect, the present invention provides a method of providing a composite image on a substrate by providing a first film on the substrate, the first film including first registration marks distributed along a length of the first film and a first portion of the composite image; providing a second film, the second film including second registration marks distributed along a length of the second film and a second portion of the composite image; aligning the second portion of the composite image on the second film with the first portion of the composite image on the first film; dispensing the second film under tension along the length of the second film; detecting the first and second registration marks during the dispensing; varying the tension along the length of the second film based on the detection of the first and second registration marks to register the first and second portions of the composite image along the lengths of the first and second films; and applying the second film to the substrate. It may be preferred to continuously apply the tension under which the second film is dispensed.

In another aspect, the present invention provides an image graphic kit including, a composite image having a length and a height transverse to the length; a first film including a first portion of the composite image on a major surface of the first film, adhesive on the opposing major surface of the first film, and a pattern of first registration marks distributed in regular intervals along the length of the first film; and a second film including a second portion of the composite image on a major surface of the second film, adhesive on an opposing major surface of the second film, and a pattern of second registration marks distributed in regular intervals along the length of the second film.

These and other features and advantages of the present invention are described below in connection with some illustrative embodiments of the invention.

### Brief Description of the Drawings

FIGURE 1 depicts a portion of a film including registration marks located thereon.
FIGURE 1A is an enlarged view of one set of registration marks useful in connection with the present invention.
FIGURE 2 depicts portions of two films applied to a substrate, both films including registration marks located thereon.
FIGURE 3 depicts an image formed by three films according to the present invention.
FIGURE 4 is a thread-up diagram of one apparatus and method of dispensing and applying films to a substrate according to the present invention.
FIGURE 4A is an enlarged partial cross-sectional view of the film being dispensed in Figure 4.
FIGURE 5 is a schematic diagram of one control system useful in connection with the apparatus depicted in Figure 4

### Description of Illustrative Embodiments of the Invention

The present invention is used in connection with the formation of relatively large graphic images on, e.g., trucks, buildings, walls, etc. Such images are typically provided using films on which an image has been formed by some printing technique that is suitable for the environment in which the image is to be located. An opposing major surface of such films is typically provided with an adhesive, e.g., pressure sensitive adhesive, heat-activated adhesive, etc. Suitable films may be made of, e.g., materials including, but not limited to, polyvinyl chloride, polyolefin materials (e.g., polyethylene or polypropylene), polyester, etc. Suitable imaging processes include, but are not limited to, electrostatic printing, ink jet printing, screen printing, etc. In many instances, these films are provided with an adhesive on the side opposite the image. Suitable adhesives may include, but are not limited to, pressure sensitive adhesives, contact adhesives, heat activated adhesives, etc. Other films and imaging processes may be used to provide suitable imaged films as well.

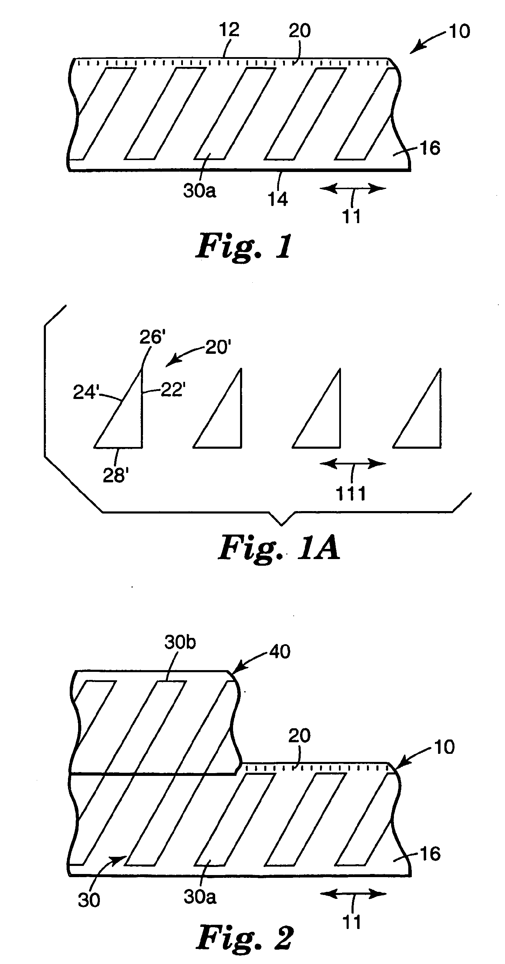

Figure 1 depicts one illustrative film 10 useful in connection with the present invention. One major surface 16 of the film 10 is depicted in Figure 1 and that surface will have a portion 30a of a composite image located thereon. The film 10 has a length extending in the direction of arrow 11 and a width between opposing edges 12 and 14 that is typically measured transverse to the length of the film 10.

In addition to a portion 30a of a composite image, the film 10 also includes registration marks 20 that, in the depicted embodiment, are located on the major surface 16 on which the image portion 30a is located. The registration marks 20 may take a variety of forms and be located in a variety of positions on the film 10. Regardless of their form or position on the film 10, the registration marks 20 should be located in known positions along the length of the film 10 relative to the image portion 30a. It may be preferred that the marks 20 be distributed along the length of the film 10 at regular intervals.

Furthermore, although it may be possible to use registration marks 20 that are all of the same size and/or shape, it may also be advantageous to include differently shaped or sized registration marks to indicate, e.g., one end of a composite image, distance to or from an end of the film being applied, etc. It may be particularly useful to provide a different registration mark at the beginning of the composite image to aid in precise alignment of the films at the start of the lamination process, especially where the films are provided in roll form with the remainder of the image obscured within the roll.

Any suitable shape may be used for the registration marks 20, e.g., rectangular, etc. If rectangular registration marks 20 are used, they may have dimensions such as, e.g., 0.125 inches (about 3 millimeters) along the length of the film 10 and a dimension of about 1 inch (2.5 centimeters) across the width of the film 10 (transverse to the length).

Rectangular registration marks 20 distributed along the length of the film 10 can be used to register along the length of the film 10 (and the composite image formed by the films). Such registration marks may not, however, be particularly useful in providing registration in directions other than along the length of the films 10. The registration marks 20' depicted in Figure 1A may, however, be useful in registering the films in the direction of their width (i.e., cross-web direction).

Each of the registration marks 20' includes a leading edge 22' and trailing edge 24'. It may be preferred, but not required, that at least one of the edges 22' or 24' be perpendicular to the length of the film (indicated by arrow 11'). The distance between the leading edge 22' and trailing edge 24' should, however, vary in the direction of the film width. In the depicted registration mark 20', the distance between the leading and trailing edges 22' and 24' reaches a minimum at an upper end 26' and a maximum at a iower end 28'. It will be understood that registration marks with shapes providing a variable distance between leading and trailing edges may be used in place of the triangular marks 20' depicted in Figure 1A.

As the film moves past a suitable registration mark sensor, the time required for the leading and trailing edges 22' and 24' to pass the sensor can be measured. If the time is increasing, it indicates that the film is moving in the direction of the upper end 26' of the registration mark 20' in Figure 1A (relative to a fixed position sensor). If the time is decreasing, it indicates that the film is moving in the opposite direction. Based on these measurements, the film can be steered in a desired direction to correct registration of the image in a direction transverse to the length of the films.

Regardless or their shape, the registration marks 20 are preferably distributed along the length of the film 10 over a distance that is at least as long as any image provided thereon so that the portions of the composite image 30 on different films can be registered as discussed in more detail below. Those portions of the film 10 that extend beyond any image requiring registration may or may not include registration marks 20.

The registration marks 20 may be visible or invisible depending on the materials used to form the marks 20. By "visible," as used herein, it is meant that the marks 20 can be seen by the unaided human eye in visible light. By "invisible," as used herein, it is meant that the marks 20 cannot be seen by the unaided human eye in visible light. Invisible registration marks may be provided of materials that can be detected using a variety of techniques dependent on the material used to form the marks. Examples include, but are not limited to, fluorescent materials (e.g., materials that fluoresce when exposed to suitable electromagnetic radiation), magnetic materials, etc.

Whether visible or invisible, the registration marks 20 may be washable, where the term "washable" as used herein means that the marks can be removed from the film 10 using a solvent, e.g., water, alcohol, etc. It may be preferred that the registration marks be washable using water with or without a detergent or other composition. In such a situation, the marks 20 may advantageously be removed merely by exposing the film 10 to rain.

The registration marks 20 on film 10 may preferably be located proximate an edge 12 of the film 10. When so placed, the registration marks 20 may be either covered by later-applied films (see, e.g., Figure 2) or the portion of the film 10 on which they are located may be removed. Where the registration marks 20 are invisible or washable, they may be located in any suitable location on the film 10.

Figure 2 depicts a portion of a second film 40 applied over the registration marks 20 on film 10. The second film 40 includes a second portion 30b of the composite image 30 that is preferably in register with the portion 30a of the composite image 30 on the first film 10. As depicted, it may be preferred that the registration marks 20 on the first film 10 be covered by the second film 40 such that the registration marks 20 on the first film 10 are not visible after the second film 40 is in position on the substrate. This may, however, not be required if the registration marks 20 are invisible, washable, etc.

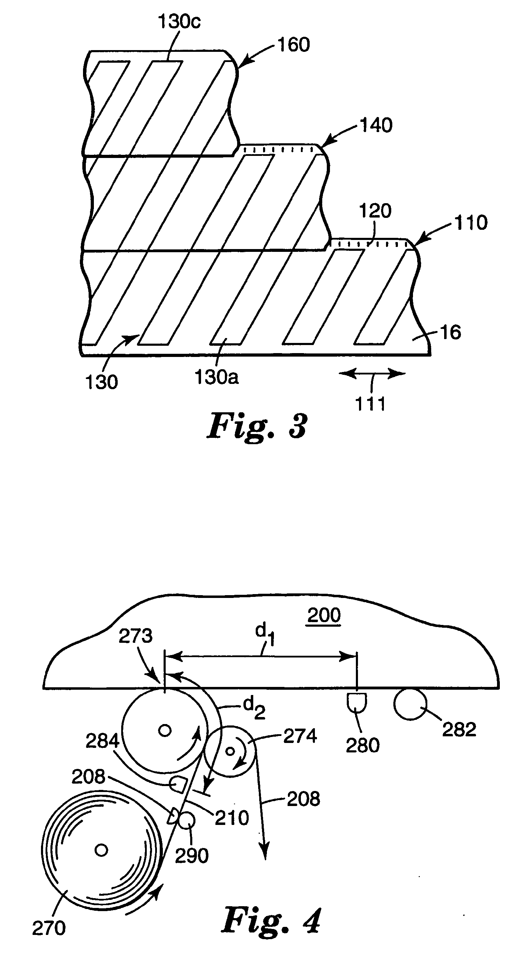

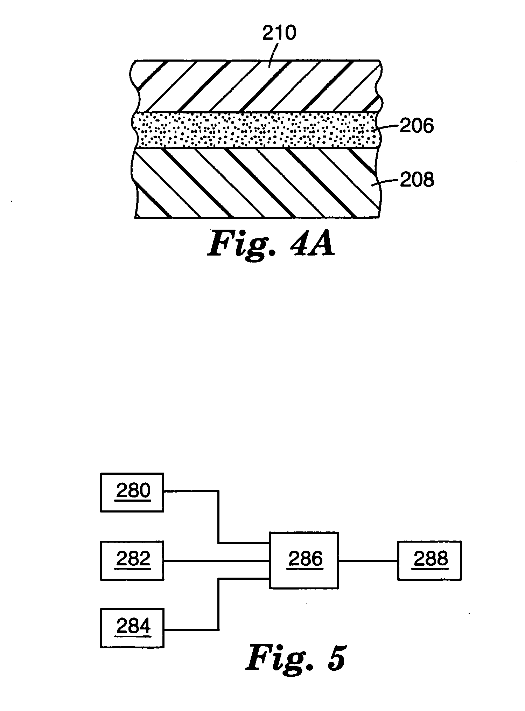

The second film 40 may also preferably include registration marks (not shown) to assist in registering the different portions of the image 30 on the two films 10 and 40. Any such marks, however, if visible and not washable, are preferably removed from the film 40 such that they do not interfere with the composite image 30. Various techniques for removing any such registration marks are discussed below with respect to Figure 4.

Although Figure 2 depicts a graphic image provided by only two films, the graphic images provided in accordance with the present invention may be formed by three or more films arranged in a direction transverse to their length, each of which contains a portion of the entire composite image. Regardless of the number of films used, however, all of the films used to provide the graphic images may preferably extend continuously and unbroken in at least one direction of the composite image.

Figure 3 depicts an illustrative set of three films 110, 140, and 160 used to provide a composite image 130 on a substrate. The first film 110 includes registration marks 120 and the second film 140 includes registration marks 150. A portion of the second film 140 may preferably be applied over the registration marks 120 on film 110. The second film 140 includes a second image portion 130b that is preferably in register with the first image portion 130a on the first film 110. As depicted, it may be preferred that the registration marks 120 on the first film 110 be covered by the second film 140 such that the registration marks 120 on the first film 110 are not visible after the second film 140 is in position on the substrate. This may, however, not be required if the registration marks 120 are invisible, washable, etc.

A portion of the third film 160 is preferably applied over the registration marks 150 on film 140. The third film 160 includes a third image portion 130c that is preferably in register with the second image portion 130b on the second film 140. As depicted, it may be preferred that the registration marks 150 on the second film 140 be covered by the third film 160 such that the registration marks 150 on the second film 140 are not visible after the third film 160 is in position on the substrate. This may, however, not be required if the registration marks 150 on the second film 140 are invisible, washable, etc.

The third film 160 may also preferably include registration marks (not shown) to assist in registering the third image portion 130c with the second image portion 130b on the third film 140. Any such marks, however, if visible and not washable, are preferably removed by any suitable technique from the film 160 such that they do not interfere with the entire composite image 130 formed by the different image portions on the different films.

The different films used to form the composite image 130 may be applied all in the same direction or in different directions along the length 111 of the films as desired.

Figure 4 illustrates one apparatus that can be used to apply and register films to form images in accordance with the present invention. The apparatus is depicted applying a film 210 to a substrate 200. The film 210 is provided from a source 270 that may preferably be provided in the form of a roll. The film 210 leaves the source 270, travels through a nip formed by laminating roll 272 and nip roll 274. It will be understood that the nip roll 274 is optional.

The preferred film 210 is attached to the substrate 200 using an adhesive, e.g., a pressure sensitive adhesive, contact adhesive, heat activated adhesive, etc. It may be preferred that the adhesive be protected by a liner. One construction of a film 210 including an adhesive 208 and protective liner 206 is illustrated in the enlarged partial cross-sectional view of Figure 4A. Specific adhesives and liners used to laminate films carrying graphic images to substrates are known and will not be described in further detail herein.

In the device, the liner 206 is separated from the film 210 at the nip formed between laminating roll 272 and the optional nip roll 274. If the nip roll 274 is removed, the liner 206 can be stripped from the film 210 at the source roll 270. The film 210 with exposed adhesive 208 is then laminated to the substrate 200 at the nip point 273 formed by laminating roll 272 on substrate 200. The film 210 is applied to the substrate 200 under tension that is applied along the length of the film 210. That tension is preferably applied continuously as the film 210 is laminated to the substrate 200. Examples of suitable minimum tension levels may be, e.g., inducing a stretch of about 0.1 % or more, or alternatively about 0.5% or more. At the upper end, suitable tension levels may be provided by inducing a stretch of about 2% or less, or alternatively about 1% or less to the film 210.

It should be noted that if the stretch is to be introduced to the film 210 while the liner 206 is still attached, the selection of materials used for the liner 206 should be consistent with the need to stretch the film 210. In other words, the liner 206 should not prevent stretching of the film/adhesive/liner composite.

When applying multiple films on a substrate, with each of the films including a portion of the same image, the first film may preferably be applied with a constant tension, for example, by inducing a constant stretch of 1% in the film as applied. Successive films would then be applied at a tension as well, with the tension varying about the setpoint used to apply the first film as needed to control registration between the different films.

The tension on film 210 can be applied by any suitable technique used in the handling of webs. In one embodiment, the roll that serves the source 270 of film 210 can be mounted on a mandrel that is operatively connect to a brake, e.g., an air brake, magnetic particle brake, etc. Another potential technique for supplying tension could be provided by overdriving rolls 272 and 274 relative the roll of source 270. Many other techniques of imparting tension to webs will be known to those skilled in the art.

The apparatus depicted in Figure 4 also includes components used to control registration by one suitable method. Among those components are a reference sensor 280 located to detect registration marks on a film already located on the substrate 200. Another component used in registration control is a distance sensor 282 used to measure distance along the substrate 200 as the film 210 is laminated thereto. A third component used in registration control is a film sensor 284 mounted to detect registration marks on the film 210 during application to the substrate 200.

Each of these registration control components is illustrated in the block diagram of Figure 5. The various sensors are connected to a controller 286 that, in turn is operatively connected to a tension control system 288. The tension control system 288 may be a brake or other suitable web tension control apparatus (e.g., including driven rolls, etc.).

Regardless of the actual form of the web tension control system used, the sensors 280, 282 and 284 may be used as follows to control web tension as the film 210 is laminated to the substrate 200. It will, however, be understood that the following method represents only one example of tension control and that many other alternative techniques could be used.

The illustrative method relies on a regular spacing, e.g., of about 2 inches (about 5 centimeters), between registration marks on a film already applied to the substrate 200 and the film 210 being applied to the substrate 200. The distance sensor 282 may be provided in the form of a pulse generator mounted on a reference wheel. The pulse generator of distance sensor 282 provides a known number of pulses, e.g., 200 pulses, evenly distributed over a distance of 1 inch (2.5 centimeter).

The illustrative method also relies on the distance (*d*_{*1*}) that the reference sensor 280 is spaced from nip point 273 (formed between laminating roll 272 and substrate 200). That reference distance *d*_{*1*} preferably differs from the distance (*d*_{*2*}) between the film sensor 284 and the nip point 273 by a known value. In one illustrative method, the difference between distances *d*_{*1*} and *d*_{*2*} may preferably be equal to one-half of the distance between the registration marks on the films, e.g., about 1 inch (2.5 centimeters).

During application of the film 210, the reference sensor 280 first detects a reference registration mark on the applied film on substrate 200, thereby signaling the controller 286 to start a counter that counts the pulses provided by the distance sensor 284. Because the offset in distances between *d*_{*1*} and *d*_{*2*} of the registration marks is about 1 inch (2.5 centimeters), the counter in controller 286 should ideally be at about 200 when the film sensor 284 detects its first registration mark on the film 210 (because 200 is one half of the 400 pulses generated between registration marks spaced about 2 inches (5 centimeters) apart). If the counter is outside of a desired range, e.g., above 210 pulses or below 190 pulses, the tension control system 288 can be signaled by the controller 286 to increase or decrease tension as required to bring the film 210 back into register with the film already located on the substrate 200.

It will be understood that a wide variety of registration control components could be used in place of those depicted in Figure 4. Furthermore, the methodology used to control registration may also vary. The end result, however, is that tension on the film 210 is varied during application to provide registration control.

Figure 4 also depicts one illustrative apparatus for removing the registration marks from the film 210 being applied where the registration marks are located along an edge of the film (see, e.g., Figure 1). The illustrated removal apparatus may be provided in the form of a score knife 290 acting on the film 210 against a support 292. The knife 290 may be used to cut or score only the film 210 itself (leaving the liner 206 intact) or it may be used to slit through both the film 210 and the liner 206. Where only the film 210 is cut or scored, the portion of the film containing the registration marks is removed with liner 206 at the nip formed by laminating roll 272 and nip roll 274.

Other potential apparatus that may be used to laminate films in accordance with the present invention are described in commonly assigned, copending U.S. Patent Application No. 09/236,807 (filed January 25, 1999) titled FLUID NIP APPLICATOR AND METHODS OF USING SAME; U.S. Patent Application No. 09/491,106 (filed January 25,2000) titled VACUUM-ASSISTED LAMINATOR AND METHODS OF USING THE SAME; and U.S. Patent Application No. 09/576,624 (filed May 23, 2000) titled STEERED VACUUM-ASSISTED LAMINATING APPARATUS AND METHODS OF USE. The various apparatus described in these documents use a reduced pressure cavity to assist in the lamination process. Outfitting of these apparatus with the appropriate sensors and controls to effectuate registration control over the films during lamination as described herein may provide additional advantages.

The preceding specific embodiments are illustrative of the practice of the invention. This invention may be suitably practiced in the absence of any element or item not specifically described in this document.

Various modifications and alterations of this invention will become apparent to those skilled in the art without departing from the scope of this invention, and it should be understood that this invention is not to be unduly limited to illustrative embodiments set forth herein, but is to be controlled by the limitations set forth in the claims and any equivalents to those limitations.

## Claims

1. A method of providing a composite image (30a, 30b) on a substrate, the method comprising:
providing a first film (10) on the substrate, the first film comprising first registration marks (20) distributed along a length of the first film and a first portion of the composite image (30a);
providing a second film (40), the second film comprising second registration marks distributed along a length of the second film and a second portion (30b) of the composite image;
aligning the second portion of the composite image (30b) on the second film (40) with the first portion of the composite image (30a) on the first film (10).
dispensing the second film under tension along the length of the second film;
detecting the first and second registration marks during the dispensing;
varying the tension along the length of the second film (40) based on the detection of the first and second registration marks to register the first and second portions of the composite image (30a, 30b) along the lengths of the first and second films; and
applying the second film (40) to the substrate.

2. A method according to claim 1, wherein the tension under which the second film is dispensed is continuously applied to the second film during the dispensing.

3. A method according to claim 1, wherein the first registration marks are visible before the second film is applied to the substrate, and further wherein applying the second film comprises locating the second film over the first registration marks.

4. A method according to claim 1, wherein the second registration marks are visible.

5. A method according to claim 4, further comprising removing at least some of the second registration marks from the second film.

6. A method according to claim 5, wherein the removing comprises removing a portion of the second film.

7. A method according to claim 6, wherein the removing occurs before the second film is applied to the substrate.

8. A method according to claim 1, wherein the first registration marks are invisible.

9. A method according to claim 1, wherein the first registration marks are washable.

10. A method according to claim 1, wherein the second registration marks are invisible.

11. A method according to claim 1, wherein the second registration marks are washable.

12. A method according to claim 1, wherein the second film is attached to a liner as dispensed.

13. A method according to claim 1, wherein the first and second registration marks are distributed in regular intervals.

14. A method according to claim 1, wherein the second film is dispensed from a roll.

15. A method according to claim 14, wherein the second film comprises an orientation indicator proximate an outside end.

16. A method according to claim 1, wherein the first and second films each comprise a width transverse to their length, and wherein the method further comprises registering the first and second portions of the composite image across the widths of the first and second films.

17. A method according to claim 16, wherein registering the first and second portions of the composite image across the widths of the first and second films comprises detecting a distance between a leading edge and a trailing edge of the second registration marks, wherein that distance is indicative of a position across the width of the second film.

18. A method according to claim 1, wherein providing the first film on the substrate comprises applying the first film to the substrate under tension.

19. A method according to claim 1, wherein the first film is applied to the substrate by dispensing the first film from a roll.

20. A method according to claim 1, wherein the composite image, first film, and second film each comprise a continuous length of at least about 5 meters.

21. A method according to claim 1, wherein the composite image, first film, and second film each comprise a continuous length of at least about 10 meters.

22. An image graphic kit for use in the method according to any of claims 1-21 comprising:
a composite image (30a, 30b) comprising a length and a height transverse to the length;
a first film (10) comprising a first portion of the composite image (30a) on a major surface (16) of the first film (10), adhesive (208) on the opposing major surface of the first film (10), and a pattern of first registration marks (20) distributed in regular intervals along the length of the first film; and
a second film (40) comprising a second portion of the composite image (30b) on a major surface of the second film, adhesive (208) on an opposing major surface of the second film, and a pattern of second registration marks distributed in regular intervals along the length of the second film, whereby the second film is aligned with the first film under a varying tension along the length of the film to ensure the alignment of the respective first and second patterns of registration works.

23. A kit according to claim 22, wherein the first and second registration marks are invisible.

24. A kit according to claim 22, wherein the second registration marks are invisible.

25. A kit according to claim 22, wherein the second registration marks are washable.

26. A kit according to claim 22, wherein the first and second films are provided in roll form.

27. A kit according to claim 22, wherein the lengths of the first and second films are at least as great as the length of the composite image.

28. A kit according to claim 22, wherein the first and second portions of the composite image on the first and second films form the entire composite image.

29. A kit according to claim 22, further comprising one or more additional films, each additional film containing an additional portion of the composite image.

## Patentansprüche

1. Verfahren zum Bereitstellen eines zusammengesetzten Bildes (30a, 30b) auf einem Substrat, wobei das Verfahren aufweist:
Bereitstellen eines ersten Films (10) auf dem Substrat, wobei der erste Film erste Passmarken (20) aufweist, die entlang einer Länge des ersten Films und eines ersten Abschnitts des zusammengesetzten Bilds (30a) verteilt sind;
Bereitstellen eines zweiten Films (40), wobei der zweite Film zweite Passmarken aufweist, die entlang einer Länge des zweiten Films und eines zweiten Abschnitts (30b) des zusammengesetzten Bilds verteilt sind;
Ausrichten des zweiten Abschnitts des zusammengesetzten Bilds (30b) auf dem zweiten Film (40) mit dem ersten Abschnitt des zusammengesetzten Bilds (30a) auf dem ersten Film (10);
Abgeben des zweiten Films unter Spannung entlang der Länge des zweiten Films;
Erfassen der ersten und zweiten Passmarken während des Abgebens;
Ändern der Spannung entlang der Länge des zweiten Films (40) auf der Grundlage der Erfassung der ersten und zweiten Passmarken, um den ersten und zweiten Abschnitt des zusammengesetzten Bilds (30a, 30b) entlang der Länge des ersten und zweiten Films aneinander anzupassen; und
Aufbringen des zweiten Films (40) auf das Substrat.

2. Verfahren nach Anspruch 1, wobei die Spannung, unter der der zweite Film abgegeben wird, während des Abgebens ununterbrochen auf dem zweiten Film aufgebracht wird.

3. Verfahren nach Anspruch 1, wobei die ersten Passmarken sichtbar sind, bevor der zweite Film auf das Substrat aufgebracht wird, und wobei ferner das Aufbringen des zweiten Films das Anordnen des zweiten Films über den ersten Passmarken aufweist.

4. Verfahren nach Anspruch 1, wobei die zweiten Passmarken sichtbar sind.

5. Verfahren nach Anspruch 4, das ferner das Entfernen von zumindest einigen zweiten Passmarken von dem zweiten Film aufweist.

6. Verfahren nach Anspruch 5, wobei das Entfernen das Entfernen eines Abschnitts des zweiten Films aufweist.

7. Verfahren nach Anspruch 6, wobei das Entfernen erfolgt, bevor der zweite Film auf das Substrat aufgebracht wird.

8. Verfahren nach Anspruch 1, wobei die ersten Passmarken unsichtbar sind.

9. Verfahren nach Anspruch 1, wobei die ersten Passmarken abwaschbar sind.

10. Verfahren nach Anspruch 1, wobei die zweiten Passmarken unsichtbar sind.

11. Verfahren nach Anspruch 1, wobei die zweiten Passmarken abwaschbar sind.

12. Verfahren nach Anspruch 1, wobei der zweite Film während des Abgebens an einer Unterlage befestigt ist.

13. Verfahren nach Anspruch 1, wobei die ersten und zweiten Passmarken in regelmäßigen Abständen verteilt werden.

14. Verfahren nach Anspruch 1, wobei der zweite Film von einer Rolle abgegeben wird.

15. Verfahren nach Anspruch 14, wobei der zweite Film in der Nähe eines äußeren Endes einen Lageanzeiger aufweist.

16. Verfahren nach Anspruch 1, wobei der erste und zweite Film jeweils eine Breite quer zu ihrer Länge aufweisen und wobei das Verfahren ferner das aneinander Anpassen des ersten und zweiten Abschnitts des zusammengesetzten Bilds über die Breite des ersten und zweiten Films aufweist.

17. Verfahren nach Anspruch 16, wobei das aneinander Anpassen des ersten und zweiten Abschnitts des zusammengesetzten Bilds über die Breite des ersten und zweiten Films das Ermitteln eines Abstands zwischen einem Vorderrand und einem Hinterrand der zweiten Passmarken aufweist, wobei dieser Abstand auf eine Lage über die Breite des zweiten Films hinweist.

18. Verfahren nach Anspruch 1, wobei das Bereitstellen des ersten Films auf dem Substrat das Aufbringen des ersten Films auf das Substrat unter Spannung aufweist.

19. Verfahren nach Anspruch 1, wobei der erste Film auf das Substrat aufgebracht wird, indem der erste Film von einer Rolle abgegeben wird.

20. Verfahren nach Anspruch 1, wobei das zusammengesetzte Bild, der erste Film und der zweite Film jeweils eine durchgängige Länge von mindestens etwa 5 Metern aufweisen.

21. Verfahren nach Anspruch 1, wobei das zusammengesetzte Bild, der erste Film und der zweite Film jeweils eine durchgängige Länge von mindestens etwa 10 Metern aufweisen.

22. Bildgrafiksatz zur Verwendung bei dem Verfahren nach einem der Ansprüche 1 bis 21, der aufweist:
ein zusammengesetztes Bild (30a, 30b), das eine Länge und eine Höhe quer zur Länge aufweist;
einen ersten Film (10), der einen ersten Abschnitt des zusammengesetzten Bilds (30a) auf einer Hauptfläche (16) des ersten Films (10), einen Klebstoff (208) auf der gegenüberliegenden Hauptfläche des ersten Films (10) und ein Muster aus ersten Passmarken (20) aufweist, die in gleichmäßigen Abständen entlang der Länge des ersten Films verteilt sind; und
einen zweiten Film (40), der einen zweiten Abschnitt des zusammengesetzten Bilds (30b) auf einer Hauptfläche des zweiten Films, einen Klebstoff (208) auf einer gegenüberliegenden Hauptfläche des zweiten Films und ein Muster aus zweiten Passmarken aufweist, die in gleichmäßigen Abständen entlang der Länge des zweiten Films verteilt sind, wodurch der zweite Film mit dem ersten Film unter einer veränderlichen Spannung entlang der Länge des Films ausgerichtet wird, um die Ausrichtung der jeweiligen ersten und zweiten Muster aus Passmarken sicherzustellen.

23. Satz nach Anspruch 22, wobei die ersten und zweiten Passmarken unsichtbar sind.

24. Satz nach Anspruch 22, wobei die zweiten Passmarken unsichtbar sind.

25. Satz nach Anspruch 22, wobei die zweiten Passmarken abwaschbar sind.

26. Satz nach Anspruch 22, wobei der erste und zweite Film in Rollenform bereitgestellt sind.

27. Satz nach Anspruch 22, wobei die Längen des ersten und zweiten Films mindestens so groß wie die Länge des zusammengesetzten Bilds sind.

28. Satz nach Anspruch 22, wobei der erste und zweite Abschnitt des zusammengesetzten Bilds auf dem ersten und zweiten Film das gesamte zusammengesetzte Bild bilden.

29. Satz nach Anspruch 22, der ferner einen oder mehrere zusätzliche Filme aufweist, wobei jeder zusätzliche Film einen zusätzlichen Abschnitt des zusammengesetzten Bilds enthält.

## Revendications

1. Procédé de fourniture d'une image composite (30a, 30b) sur un substrat, le procédé comprenant :
la fourniture d'un premier film (10) sur le substrat, le premier film comprenant des premières marques d'alignement (20) réparties le long d'une longueur du premier film et une première partie de l'image composite (30a) ;
la fourniture d'un deuxième film (40), le deuxième film comprenant des deuxièmes marques d'alignement réparties le long d'une longueur du deuxième film et une deuxième partie (30b) de l'image composite ;
l'alignement de la deuxième partie de l'image composite (30b) sur le deuxième film (40) avec la première partie de l'image composite (30a) sur le premier film (10) ;
le déroulement du deuxième film sous tension le long de la longueur du deuxième film ;
la détection des premières et deuxièmes marques d'alignement durant le déroulement ;
la variation de la tension le long de la longueur du deuxième film (40) en fonction de la détection des premières et deuxièmes marques d'alignement afin d'aligner les première et deuxième parties de l'image composite (30a, 30b) le long des longueurs des premier et deuxième films ; et
l'application du deuxième film (40) sur le substrat.

2. Procédé selon la revendication 1, dans lequel la tension à laquelle le deuxième film est déroulé est appliquée continûment au deuxième film durant le déroulement.

3. Procédé selon la revendication 1, dans lequel les premières marques d'alignement sont visibles avant l'application du deuxième film sur le substrat ; et en outre dans lequel l'application du deuxième film comprend le positionnement du deuxième film par-dessus les premières marques d'alignement.

4. Procédé selon la revendication 1, dans lequel les deuxièmes marques d'alignement sont visibles.

5. Procédé selon la revendication 4, comprenant en outre l'élimination d'au moins certaines des deuxièmes marques d'alignement du deuxième film.

6. Procédé selon la revendication 5, dans lequel l'élimination comprend l'élimination d'une partie du deuxième film.

7. Procédé selon la revendication 6, dans lequel l'élimination se produit avant l'application du deuxième film sur le substrat.

8. Procédé selon la revendication 1, dans lequel les premières marques d'alignement sont invisibles.

9. Procédé selon la revendication 1, dans lequel les premières marques d'alignement sont lavables.

10. Procédé selon la revendication 1, dans lequel les deuxièmes marques d'alignement sont invisibles.

11. Procédé selon la revendication 1, dans lequel les deuxièmes marques d'alignement sont lavables.

12. Procédé selon la revendication 1, dans lequel le deuxième film est attaché à une doublure durant son déroulement.

13. Procédé selon la revendication 1, dans lequel les premières et deuxièmes marques d'alignement sont réparties à intervalles réguliers.

14. Procédé selon la revendication 1, dans lequel le deuxième film est déroulé à partir d'un rouleau.

15. Procédé selon la revendication 14, dans lequel le deuxième film comprend un indicateur d'orientation près d'une extrémité extérieure.

16. Procédé selon la revendication 1, dans lequel les premier et deuxième films comprennent chacun une largeur transversale à leur longueur, et dans lequel le procédé comprend en outre l'alignement des première et deuxième parties de l'image composite en travers des largeurs des premier et deuxième films.

17. Procédé selon la revendication 16, dans lequel l'alignement des première et deuxième parties de l'image composite en travers des largeurs des premier et deuxième films comprend la détection d'une distance entre un bord avant et un bord arrière des deuxièmes marques d'alignement, dans lequel cette distance indique une position en travers de la largeur du deuxième film.

18. Procédé selon la revendication 1, dans lequel la fourniture du premier film sur le substrat comprend l'application du premier film sur le substrat sous tension.

19. Procédé selon la revendication 1, dans lequel le premier film est appliqué sur le substrat en déroulant le premier film à partir d'un rouleau.

20. Procédé selon la revendication 1, dans lequel l'image composite, le premier film et le deuxième film comprennent chacun une longueur continue d'au moins 5 mètres environ.

21. Procédé selon la revendication 1, dans lequel l'image composite, le premier film et le deuxième film comprennent chacun une longueur continue d'au moins 10 mètres environ.

22. Kit graphique d'image destiné à être utilisé dans le procédé selon l'une quelconque des revendications 1 à 21, comprenant :
une image composite (30a, 30b) comprenant une longueur et une hauteur transversale à la longueur ;
un premier film (10) comprenant une première partie de l'image composite (30a) sur une surface principale (16) du premier film (10), un adhésif (208) sur la surface principale opposée du premier film (10), et une configuration de premières marques d'alignement (20) réparties à intervalles réguliers le long de la longueur du premier film ; et
un deuxième film (40) comprenant une deuxième partie de l'image composite (30b) sur une surface principale du deuxième film, un adhésif (208) sur une surface principale opposée du deuxième film, et une configuration de deuxièmes marques d'alignement réparties à intervalles réguliers le long de la longueur du deuxième film, si bien que le deuxième film est aligné avec le premier film sous une tension variable le long de la longueur du film afin de garantir l'alignement des première et deuxième configurations respectives des marques d'alignement.

23. Kit selon la revendication 22, dans lequel les premières et deuxièmes marques d'alignement sont invisibles.

24. Kit selon la revendication 22, dans lequel les deuxièmes marques d'alignement sont invisibles.

25. Kit selon la revendication 22, dans lequel les deuxièmes marques d'alignement sont lavables.

26. Kit selon la revendication 22, dans lequel les premier et deuxième films sont fournis sous forme de rouleaux.

27. Kit selon la revendication 22, dans lequel les longueurs des premier et deuxième films sont au moins aussi grandes que la longueur de l'image composite.

28. Kit selon la revendication 22, dans lequel les première et deuxième parties de l'image composite sur les premier et deuxième films forment toute l'image composite.

29. Kit selon la revendication 22, comprenant en outre un ou plusieurs films supplémentaires, chaque film supplémentaire contenant une partie supplémentaire de l'image composite.
